# EUROPÄISCHE PATENTSCHRIFT

(11) **EP 2 888 023 B1**
(45) Veröffentlichungstag und Bekanntmachung des Hinweises auf die Patenterteilung: **20.03.2019**
(21) Anmeldenummer: 13750719.0
(22) Anmeldetag: 22.08.2013
(51) Int. Cl.: B01D 46/00, B01D 46/24

(54) **FILTEREINRICHTUNG, INSBESONDERE ZUR GASFILTRATION**
FILTER DEVICE, IN PARTICULAR FOR GAS FILTRATION
DISPOSITIF DE FILTRATION, EN PARTICULIER POUR LA FILTRATION DE GAZ

(30) Priorität: 22.08.2012 DE 202012012669 U; 22.08.2012 DE 102012016557
(43) Veröffentlichungstag der Anmeldung: 01.07.2015
(73) Patentinhaber: MANN+HUMMEL GmbH, 71636 Ludwigsburg (DE)
(72) Erfinder: WALTENBERG, Klaus, 71723 Großbottwar (DE); SCHMID, Daniel, 74343 Sachsenheim (DE); Straßenberger, Norbert, 84166 Adlkofen (DE); KROHLOW, Matthias, 71083 Herrenberg (DE)
(86) Internationale Anmeldenummer: PCT/EP2013/067424
(87) Internationale Veröffentlichungsnummer: WO 2014/029829

(56) Entgegenhaltungen:
- DE-U1-202004 020 174
- DE-U1-202005 020 099
- US-A1- 2002 116 909

## Beschreibung

### Technisches Gebiet

Die Erfindung bezieht sich auf eine Filtereinrichtung, insbesondere zur Gasfiltration, beispielsweise auf einen Luftfilter für Brennkraftmaschinen, nach dem Oberbegriff des Anspruches 1 sowie auf ein in der Filtereinrichtung aufnehmbares Filterelement.

### Stand der Technik

Bekannt sind Luftfilter für Kraftfahrzeuge zur Filtration der einer Brennkraftmaschine eines Fahrzeugs zuzuführenden Verbrennungsluft. Ein derartiger, beispielsweise in der DE 20 2005 020 099 U1 beschriebener Luftfilter weist ein hohlzylindrisches Filterelement auf, welches radial von außen nach innen von der zu reinigenden Verbrennungsluft durchströmt wird, wobei die Reinluft axial abgeleitet wird. Das Filterelement ist in einem Filtergehäuse aufgenommen und wird gemäß der DE 20 2005 020 099 U1 mithilfe eines Halterungsteils, das einteilig mit einer stirnseitigen Endscheibe des Filterelementes ausgebildet ist und radial über die Mantelfläche des Filterelementes hinausragt, klemmend und verrastend an einem Gegenhalter an der Innenseite des Gehäusedeckels fixiert. Hierbei wird das Halterungsteil bei der Einsetzbewegung des Filterelementes axial mit dem Gegenhalter verrastet.

Vergleichbare Ausführungen sind auch aus der WO 2011/104107 A1, DE 10 2011 120 073 B3 und US 7 604 677 B2 bekannt.

### Offenbarung der Erfindung

Der Erfindung liegt die Aufgabe zugrunde, eine Filtereinrichtung mit einfachen konstruktiven Maßnahmen so auszubilden, dass das Filterelement sicher gehalten ist und auf einfache Weise ausgetauscht werden kann.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung wird zur Filtration eines Fluids eingesetzt, insbesondere eines Gases, wobei gegebenenfalls auch flüssige Medien gefiltert werden können. Bevorzugt findet die erfindungsgemäße Filtereinrichtung Anwendung als Luftfilter für Kraftfahrzeuge, insbesondere für eine Brennkraftmaschine oder für die dem Innenraum des Kraftfahrzeugs zuzuführende Frischluft.

Das in der Filtereinrichtung aufgenommene Filterelement ist im montierten Zustand am Filtergehäusedeckel fixiert. Eine zweite Stelle ist ebenfalls am Filtergehäusedeckel vorgesehen.

In der erfindungsgemäßen Ausführungsform mit einer Fixierung des Filterelementes ausschließlich im Gehäusedeckel können Toleranzen und Relativbewegungen zwischen Gehäuse und Deckel bei der Auslegung der Element-Fixierung außer Acht gelassen werden, so dass eine engere Toleranzauslegung der Verbindungseinrichtungen und der Dichteinrichtung zwischen Filterelement und Gehäusedeckel möglich ist. Im Servicefall kann das Filterelement auf einfache Weise im Deckel gehalten vom Gehäuse entfernt werden. Eine Entnahme des Filterelementes aus dem Deckel ist außerhalb der Einbauumgebung der Luftfiltereinrichtung auf einfache Weise möglich.

Die Filtereinrichtung weist ein Filterelement auf, das von dem zu reinigenden Fluid durchströmbar und in einem Filtergehäuse aufgenommen ist, welches von einem Gehäusedeckel verschließbar ist. Am Filterelement ist ein Halterungsteil angeordnet, das die äußere Mantelfläche des Filterelementes überragt und dem ein Gegenhalterungsteil am Gehäusedeckel zugeordnet ist. Im montierten Zustand greifen die Halterungsteile am Filterelement und am Gehäusedeckel ineinander, so dass ein erster Halte- oder Fixierpunkt zur Halterung des Filterelementes am Gehäusedeckel gegeben ist.

Darüber hinaus weist das Filterelement eine weitere Verbindungsstelle zum Gehäusedeckel auf. Dies wird mithilfe eines Formschlussteils realisiert, das mit axialem Abstand zu dem Halterungsteil am Filterelement angeordnet und dem ein Gegenformschlussteil zugeordnet ist. Das Halterungsteil ist an der Endscheibe als Rasthaken ausgeführt, der radial die Mantelfläche des Filterelements überragt, wobei an dem Halterungsteil zwei elastisch federnde Kontaktteile ausgebildet sind und zwischen den Kontaktteilen ist das als Rastlasche ausgebildete Gegenhalterungsteil des Gehäusedeckels aufnehmbar. Das Formschlussteil ist an der axial gegenüberliegenden Endscheibe angeordnet, wobei das Formschlussteil taschenförmig ausgeführt ist. Das taschenförmige Formschlussteil ist am Filterelement in Umfangsrichtung von einer Wandung begrenzt und weist einen Anschlag an einer Umfangswandung auf. Die der Umfangswandung gegenüberliegende Seite des Formschlussteils ist offen ausgebildet und das korrespondierende Gegenformschlussteil ist an der Innenseite des Gehäusedeckels komplementär ausgebildet und kann über die jeweils offene Seite der Formschlussteile in die Formschlussteile bis zum jeweiligen Anschlag einfahren.

Aufgrund des axialen Abstandes zwischen dem Halterungsteil und dem Formschlussteil, die beide am Filterelement angeordnet sind, wird das Filterelement über zwei verschiedene, axial beabstandete Verbindungsstellen am Gehäuse oder am Gehäusedeckel fixiert.

Zur Halterung und Verriegelung des Filterelementes am Gehäusedeckel oder Filtergehäuse wird dem Filterelement eine Drehbewegung um seine Längsachse aufgeprägt. Die Drehbewegung des Filterelementes überführt sowohl das Halterungsteil als auch das Formschlussteil am Filterelement in die Verriegelungsposition, in der beide Teile formschlüssig in die zugeordneten, gehäuse- oder deckelseitigen Gegenhalterungs- bzw. Gegenformschlussteile eingreifen. Der Formschluss sowohl am Halterungsteil als auch am Formschlussteil wird somit über die gleiche Drehbewegung um die Längsachse des Filterelementes hergestellt. In entsprechender Weise kann der Formschluss für das Entfernen des Filterelementes aus dem Gehäusedeckel oder Filtergehäuse durch eine Drehbewegung in Gegenrichtung wieder gelöst werden.

Das Filterelement ist vorzugsweise hohlzylindrisch ausgebildet und wird radial von außen nach innen von dem zu reinigenden Fluid durchströmt. Die außen liegende Mantelfläche bildet die Rohseite, der Innenraum die Reinseite, aus dem das gereinigte Fluid axial abgeleitet wird. Zum Einsetzen und Montieren wird das Filterelement axial in seine Montageposition gebracht und anschließend um seine Längsachse so weit verdreht, bis das Halterungsteil und das Formschlussteil am Filterelement in Formschlussposition mit dem zugeordneten Gegenhalterungsteil bzw. Gegenformschlussteil am Gehäusedeckel oder Filtergehäuse gelangt. Hierbei kann es zweckmäßig sein, zumindest eine der Verriegelungen nach Art eines Bajonettverschlusses auszubilden, bei dem während der Drehbewegung Teile am Filterelement und am Gehäusedeckel oder Filtergehäuse in der Weise formschlüssig miteinander verrasten, dass in Achsrichtung ein Formschluss gegeben ist. Beispielsweise kann das Formschlussteil am Filterelement als Bajonettverschluss ausgebildet sein. Möglich ist es aber auch, zusätzlich oder alternativ das Halterungsteil nach Art eines Bajonettverschlusses am Gehäusedeckeloder Filtergehäuse zu verriegeln.

Das Filterelement weist an mindestens einer axialen Stirnseite, gegebenenfalls an beiden axialen Stirnseiten jeweils eine Endscheibe auf, die beispielsweise aus Kunststoff besteht und fest mit dem Filtermittel des Filterelementes verbunden ist. Die Endscheiben sind Träger des Halterungsteils und/oder des Formschlussteils am Filterelement; gegebenenfalls sind Halterungsteil und/oder Formschlussteil einteilig mit der jeweiligen Endscheibe ausgebildet. Das Halterungsteil ragt hierbei radial über die Mantelfläche des Filterelementes hinaus, wohingegen das Formschlussteil nicht zwingend über die Mantelfläche des Filterelementes radial hinausragt, sondern gegebenenfalls innerhalb der Mantelfläche liegt und nur in axialer Richtung über die Fläche der Endscheibe hinausragt. Das Formschlussteil ist als eine Tasche ausgebildet, welche gegebenenfalls an der axialen Stirnseite einer Endscheibe angeordnet ist, wobei das gehäuse- oder deckelseitige Gegenformschlussteil ein Verrastungselement aufweist, das bei der Drehbewegung des Filterelementes in die Tasche einfährt. Das Gegenformschlussteil weist hierfür eine komplementär zu der Tasche am Filterelement ausgebildete Kontur auf, die in die umfangsseitig an einem Ende offene Tasche einfährt, wobei die Drehbewegung dadurch begrenzt ist, dass das Gegenformschlussteil an die Innenwand am anderen Ende der Tasche anschlägt.

Das Halterungsteil am Filterelement ist als ein Rasthaken ausgebildet, der radial über das Filterelement übersteht und in der montierten Position in eine Rastlasche einragt, welche das Gegenhalterungsteil am Gehäusedeckel bildet. Erfindungsgemäß sind am Rasthaken zwei elastisch federnde Kontaktteile ausgebildet, die im montierten Zustand die Rastlasche am Gehäusedeckel mit einer Klemmkraft beaufschlagen, so dass der Rasthaken sicher an der Rastlasche gehalten ist. Die elastisch federnden Kontaktteile sind insbesondere einteilig mit dem Rasthaken ausgebildet.

Um ein versehentliches Lösen des Filterelementes durch Rückdrehen um die Filterelementlängsachse zu verhindern, ist gemäß weiterer, vorteilhafter Ausführung ein gehäuse- oder deckelseitiger, elastischer Schnapphebel vorgesehen, der im montierten Zustand an einem Rastvorsprung an der Umfangsseite des Filterelementes anliegt. Der Schnapphebel kann an der Innenseite des Gehäusedeckels oder gegebenenfalls auch unmittelbar am Filtergehäuse angeordnet sein. Der Schnapphebel, welcher vorteilhafterweise einteilig mit dem Gehäusedeckel oder dem Filtergehäuse ausgebildet ist, wirkt in Radialrichtung elastisch und ragt mit einer Klemmkraft radial in den Rastvorsprung an der Umfangsseite des Filterelementes ein. Im montierten Zustand ist hierdurch ein Lösen des Filterelementes ausgeschlossen. Dieses kann erst entnommen werden, wenn der Schnapphebel manuell elastisch aufgebogen wird, so dass der Schnapphebel in Außereingriff mit dem Rastvorsprung an der Umfangsseite des Filterelementes gelangt und das Filterelement so weit um seine Längsachse zurückgedreht werden kann, bis der Formschluss zwischen Halterungsteil und Gegenhalterungsteil sowie zwischen Formschlussteil und Gegenformschlussteil aufgehoben ist; anschließend kann das Filterelement axial entnommen werden.

In einer alternativen Ausführung ist ein elastischer Schnapphebel an der Endscheibe vorgesehen, der im montierten Zustand an einem Rastvorsprung an der Innenseite des Gehäusedeckels oder des Gehäuses einrastet. Der Schnapphebel, welcher vorteilhafterweise einteilig mit der Endscheibe ausgebildet ist, wirkt in Radialrichtung elastisch und ragt mit einer Klemmkraft radial in den Rastvorsprung an der Gehäusewand oder der Gehäusedeckelwand ein.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1a: in perspektivischer Einzelteildarstellung ein Luftfiltergehäuse für eine Brennkraftmaschine eines Fahrzeugs,
- Fig. 1b: in perspektivischer Darstellung einen horizontalen Schnitt durch einen Luftfilter mit einem hohlzylindrischen Filterelement, das formschlüssig am Filtergehäusedeckel (nur in Teilen dargestellt) fixiert ist,
- Fig. 2: in vergrößerter Darstellung ein Halterungsteil am Filterelement, welches als Rasthaken ausgeführt ist und in eine Rastlasche an der Innenseite des Gehäusedeckels einragt,
- Fig. 3: das Filterelement in perspektivischer Ansicht mit Blick auf die geschlossene Endscheibe,
- Fig. 4: das Filterelement in perspektivischer Ansicht mit Blick auf die Endscheibe mit Reinluftauslass,
- Fig. 5: das Filterelement in seitlicher Ansicht,
- Fig. 6: eine vergrößerte Darstellung eines als Tasche ausgeführten Formschlussteils an einer der Stirnseiten des Filterelementes,
- Fig. 7: eine perspektivische Einzelansicht des Gehäusedeckels,
- Fig. 8: in vergrößerter Darstellung ein Gegenformschlussteil an der Innenseite des Gehäusedeckels,
- Fig. 9: der Gehäusedeckel mit eingesetztem Filterelement im verriegelten Zustand,
- Fig.10: in vergrößerter Ansicht ein Schnapphaken, welcher einteilig mit dem Gehäusedeckel ausgebildet ist, wobei der Schnapphaken an einem Rastvorsprung an der Umfangsseite des Filterelementes anliegt,
- Fig.11: eine Fig. 9 entsprechende Darstellung, jedoch mit dem Filterelement im entriegelten Zustand,
- Fig.12: eine Darstellung gemäß Fig. 10 mit dem Schnapphaken im offenen Zustand.

In den Figuren sind gleiche Bauteile mit gleichen Bezugszeichen versehen.

### Ausführungsform(en) der Erfindung

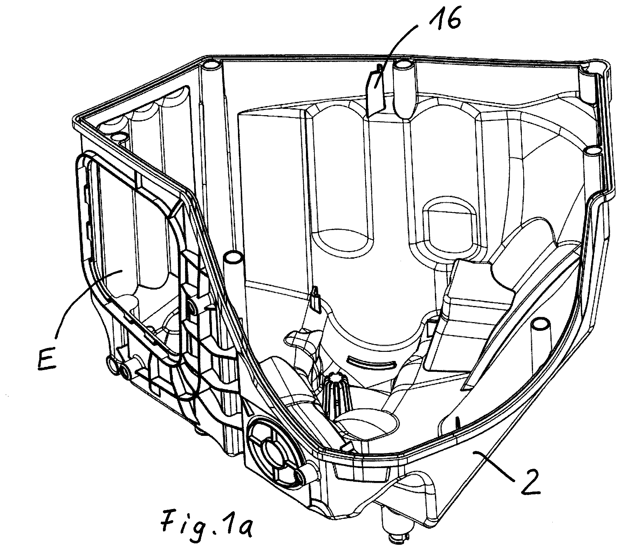

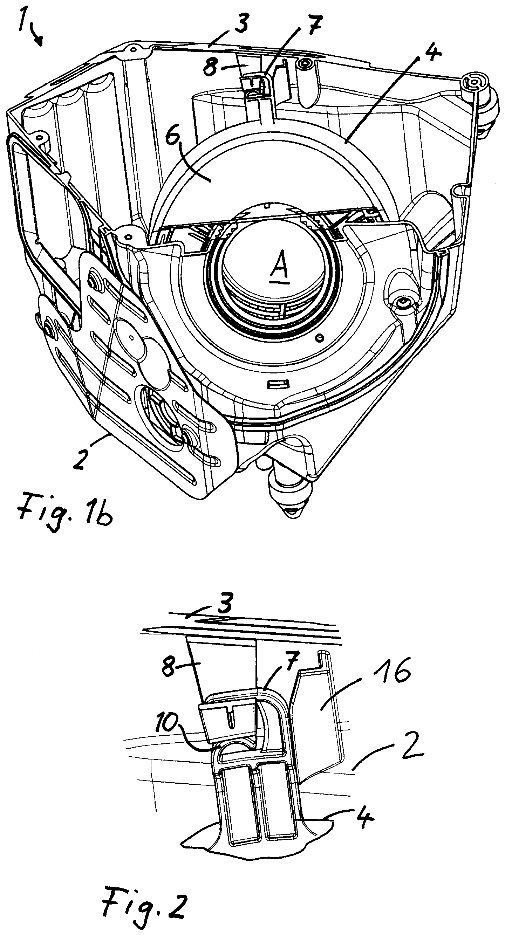

In den Figuren ist als Ausführungsbeispiel ein Luftfilter für die Brennkraftmaschine eines Kraftfahrzeugs dargestellt. Die als Luftfilter ausgebildete Filtereinrichtung 1 weist in einem Filtergehäuse 2 (Fig. 1a) ein hohlzylindrisches Filterelement 4 auf, welches radial von außen nach innen von dem zu reinigenden Fluid durchströmt wird. Die zu reinigende Luft strömt durch einen seitlichen Einlass E in das Luftfiltergehäuse 2 ein. Die Ableitung des gereinigten Fluids erfolgt axial über den innen liegenden Reinraum durch den Auslass A des Gehäusedeckels 3 (Fig. 1b). Das Filterelement 4 ist über axial beabstandete Halterungs- und Formschlusselemente an einem Gehäusedeckel 3 fixiert, der auf das Filtergehäuse 2 aufsetzbar ist.

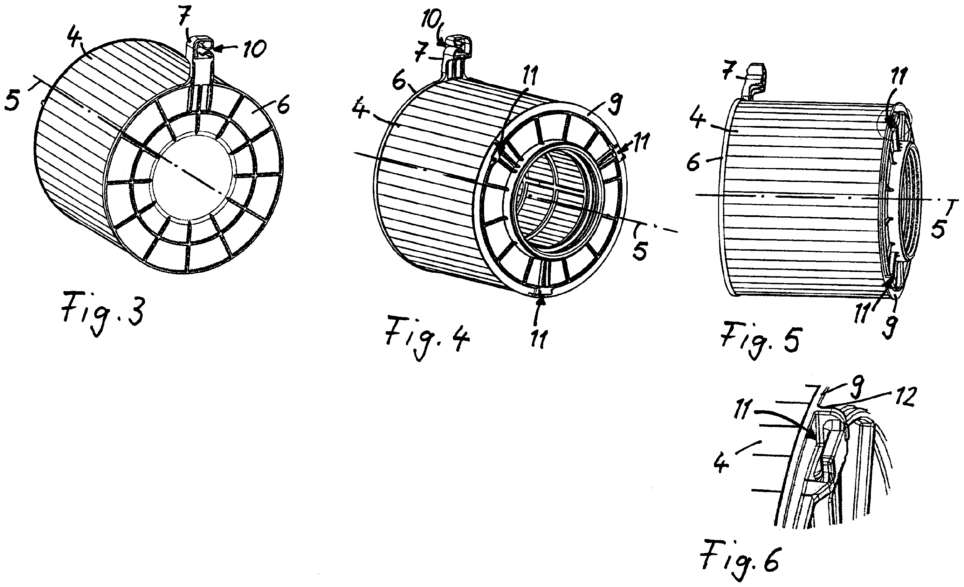

Wie Fig. 1b in Verbindung mit Fig. 2 zu entnehmen, befindet sich ein Halterungsteil 7 an einer Stirnseite des Filterelementes 4 und ist insbesondere einteilig mit einer Endscheibe 6 aus Kunststoff ausgebildet, die auf die Stirnseite des Filtermediums des Filterelementes 4 aufgesetzt ist. Das Halterungsteil 7 ist als ein Rasthaken ausgeführt, der radial die Mantelfläche des Filterelementes 4 überragt. Dem Halterungsteil 7 ist ein Gegenhalterungsteil 8 zugeordnet, welches als Rastlasche ausgeführt und an der Innenseite des Gehäusedeckels 3 angeordnet ist. Am Halterungsteil 7 sind elastisch federnde Kontaktteile 10 angeformt, die im montierten Zustand gegen das Gegenhalterungsteil 8 drücken und auf diese Weise für einen erhöhten Kraftschluss zwischen Halterungsteil 7 und Gegenhalterungsteil 8 sorgen. Wie Fig. 2 mit den Fig. 3 und 4 zu entnehmen, sind an dem Halterungsteil 7 am Filterelement 4 zwei elastisch federnde Kontaktteile 10 ausgebildet, zwischen denen das Gegenhalterungsteil 8 aufgenommen wird. Beim Aufsetzen des Gehäusedeckels 3 auf das Filtergehäuse 2 sichert eine Sicherungsrippe 16 am Filtergehäuse 2 die Verbindung gegen Lösen.

In den Fig. 3 bis 5 ist das Filterelement 4 in verschiedenen perspektivischen Ansichten gezeigt. Das Filterelement 4 ist hohlzylindrisch ausgebildet und weist eine Längsachse 5 auf. An den Stirnseiten ist das Filterelement 4 jeweils von einer Endscheibe 6 bzw. 9 eingefasst.

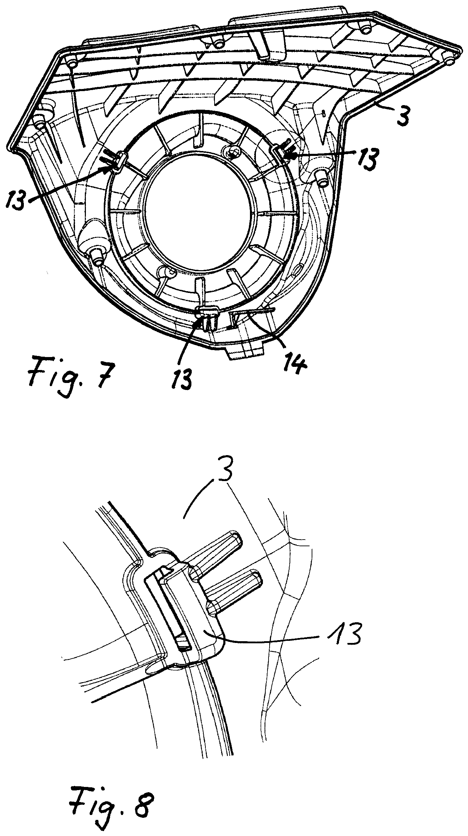

Das Halterungsteil 7 ist einteilig mit einer ersten Endscheibe 6 am Filterelement 4 ausgebildet und überragt, insbesondere in radialer Richtung, die äußere Mantelfläche des Filterelementes. Im Bereich der gegenüberliegenden Endscheibe 9 befinden sich gleichmäßig über den Umfang verteilt insgesamt drei Formschlussteile 11, die einteilig mit dieser Endscheibe ausgebildet und, wie der vergrößerten Darstellung gemäß Fig. 6 zu entnehmen, taschenförmig ausgeführt sind. Jedes taschenförmige Formschlussteil 11 am Filterelement 4 ist in Umfangsrichtung von einer Wandung begrenzt, wohingegen die der Umfangswandung gegenüberliegende Seite der Tasche 11 offen ausgebildet ist. Dies ermöglicht es, dass ein komplementär ausgebildetes Gegenformschlussteil 13 (Fig. 7, 8) an der Innenseite des Gehäusedeckels 3 über die offene Seite der Tasche 11 in diese bis zum Anschlag an die Umfangswandung 12 einfahren kann.

Somit befinden sich im Bereich beider axial gegenüberliegender Stirnseiten des Filterelementes 4 Halterungs- oder Formschlussteile 7, 11, die bei einer Drehbewegung des Filterelementes 4 um dessen Längsachse 5 in formschlüssige Verbindung mit dem zugeordneten Gegenhalterungsteil 8 bzw. Gegenformschlussteil 13 an den Gehäusedeckel 3 gelangen. Im Bereich der Endscheibe 6 befindet sich nur ein einzelnes Halterungsteil 7, wohingegen im Bereich der gegenüberliegenden Endscheibe 9 insgesamt drei über den Umfang gleichmäßig verteilt angeordnete Formschlussteile 11 vorgesehen sind. Dementsprechend sind, wie Fig. 7 zu entnehmen, auch an der Innenseite des Gehäusedeckels 3 insgesamt drei gleichmäßig über den Umfang verteilte Gegenformschlussteile 13 vorgesehen.

Das Gegenformschlussteil 13 an der Innenseite des Gehäusedeckels 3 ist, wie der vergrößerten Darstellung gemäß Fig. 8 zu entnehmen, als ein axial hervorspringender und sich in Umfangsrichtung erstreckender Vorsprung ausgeführt, der bei der Montage des Filterelementes bei der Drehbewegung in die Tasche 11 eingeführt wird.

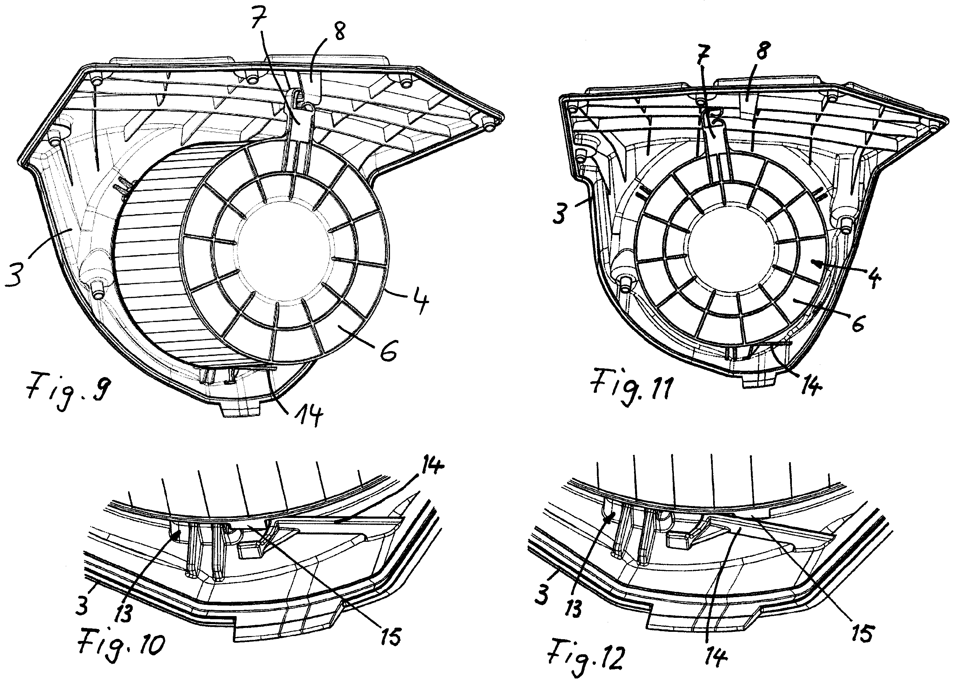

Wie Fig. 7 in Verbindung mit den Fig. 9 bis 12 zu entnehmen, ist an der Innenseite des Gehäusedeckels 3 ein elastisch federnder Schnapphebel 14 angeformt, der in Radialrichtung des Filterelementes 4 federn kann und das montierte Filterelement 4 in seiner verriegelten Drehposition sichert. An der Umfangsseite der Endscheibe 6 am Filterelement 4 befindet sich ein Rastvorsprung 15 (Fig. 10, 12), an dem der Schnapphebel 14 bei geschlossenem bzw. verriegeltem Filterelement 4 verrastend anliegt. Somit ist in der geschlossenen Position des Filterelementes 4 (Fig. 9, 10) die Drehlage des Filterelementes gesichert und ein versehentliches Lösen des Filterelementes ausgeschlossen.

Zum Entnehmen des Filterelementes 4 aus dem Gehäusedeckel 3 muss der Schnapphebel 14 manuell aus seiner verriegelten Position radial nach außen aufgebogen werden, so dass der Schnapphebel 14 in Außereingriff mit dem Rastvorsprung 15 gelangt und der Rastformschluss in Umfangsrichtung aufgehoben ist. Daraufhin kann das Filterelement 4 um seine Längsachse zurückgedreht werden, bis das Formschlussteil 11 in Außereingriff mit dem Gegenformschlussteil 12 und das Halterungsteil 7 ebenfalls in Außereingriff mit dem Gegenhalterungsteil 8 gelangt. Daraufhin kann das Filterelement 4 axial entnommen werden.

Das Einsetzen des Filterelementes 4 in den Gehäusedeckel 3 erfolgt in umgekehrter Reihenfolge, wobei der Schnapphebel 14 von selbst einrastet. Somit bilden Filtergehäusedeckel 3 und Filterelement 4 eine leicht handhabbare Einheit, die einfach mit dem Filtergehäuse 2 zu einer Filtereinrichtung 1 gefügt werden kann. Beim Einbau der Filtergehäusedeckel-Filterelement-Einheit in das Filtergehäuse 2 sichert die gehäusefeste Sicherungsrippe 16 zusätzlich die Verbindung von Halterungsteil 7 und Gegenhalterungsteil 8, da durch das Zusammenspiel von Halterungsteil 7 und Sicherungsrippe 16 eine Drehbewegung des Filterelementes 4 um seine Längsachse unterbunden wird.

Die Fixierung des Filterelementes 4 im Luftfilter erfolgt in der dargestellten Ausführungsform ausschließlich im Filtergehäusedeckel 3. Somit brauchen Bauteiltoleranzen und Bauteilbewegungen im Betrieb und Bauteiländerungen durch Wärme und Feuchtigkeit zwischen Filtergehäuse 2 und Filtergehäusedeckel 3 bei der Auslegung der Befestigung und Abdichtung des Filterelementes 4 nicht berücksichtigt werden.

## Patentansprüche

1. Filtereinrichtung, insbesondere zur Gasfiltration, insbesondere Luftfilter für Brennkraftmaschinen, mit einem Filterelement (4), das in einem Filtergehäuse (2) aufgenommen ist, welches von einem Gehäusedeckel (3) verschließbar ist, wobei am Filterelement (4) ein die äußere Mantelfläche überragendes Halterungsteil (7) angeordnet ist, dem ein Gegenhalterungsteil (8) am Gehäusedeckel (3) zugeordnet ist und die Halterungsteile (7) im montierten Zustand ineinandergreifen, **dadurch gekennzeichnet, dass** am Filterelement (4) mit axialem Abstand zum Halterungsteil (7) ein Formschlussteil (11) angeordnet ist, dem ein Gegenformschlussteil (13) zugeordnet ist, wobei das Halterungsteil (7) an der Endscheibe (6) als Rasthaken ausgeführt ist, der radial die Mantelfläche des Filterelements (4) überragt, wobei an dem Halterungsteil (7) zwei elastisch federnde Kontaktteile (10) ausgebildet sind, wobei zwischen den Kontaktteilen (10) das als Rastlasche ausgebildete Gegenhalterungsteil (8) des Gehäusedeckels (3) aufnehmbar ist und wobei das Formschlussteil (11) an der axial gegenüberliegenden Endscheibe (9) angeordnet ist, wobei das Formschlussteil (11) taschenförmig ausgeführt ist und wobei das taschenförmige Formschlussteil (11) am Filterelement (4) in Umfangsrichtung von einer Wandung begrenzt ist und einen Anschlag an einer Umfangswandung (12) aufweist und wobei die der Umfangswandung gegenüberliegende Seite des Formschlussteils (11) offen ausgebildet ist, wobei das korrespondierende Gegenformschlussteil (13) an der Innenseite des Gehäusedeckels (3) komplementär ausgebildet ist und über die jeweils offene Seite der Formschlussteile (11) in die Formschlussteile (11) bis zum jeweiligen Anschlag einfahren kann, wobei die Formschluss- und Halterungsteile (11, 7) über eine Drehbewegung um die Längsachse (5) des Filterelements (4) in einen formschlüssig ineinandergreifenden Zustand überführbar sind.

2. Filtereinrichtung nach Anspruch 1, **dadurch gekennzeichnet, dass** das Filterelement (4) hohlzylindrisch ausgebildet ist und das Halterungsteil (7) die zylindrische Mantelfläche radial überragt.

3. Filtereinrichtung nach einem der Ansprüche 1 oder 2, **dadurch gekennzeichnet, dass** axial auf gleicher Höhe, jedoch über den Umfang verteilt mehrere Formschlussteile (11) am Filterelement (4) angeordnet sind.

4. Filtereinrichtung nach einem der Ansprüche 1 bis 3, **dadurch gekennzeichnet, dass** das Formschlussteil (11) am Filterelement (4) als Bajonettverschluss ausgebildet ist.

5. Filtereinrichtung nach einem der Ansprüche 1 bis 4, **dadurch gekennzeichnet, dass** der elastische Schnapphebel (14) im montierten Zustand an einem Rastvorsprung (15) an der Umfangsseite des Filterelements (4) anliegt.

6. Filterelement, insbesondere zur Gasfiltration, insbesondere Luftfilterelement für Brennkraftmaschinen, umfassend ein Filtermedium, jeweils eine Endscheibe (6, 9) an den Stirnseiten des Filterelements (4), wobei ein Halterungsteil (7) an einer Endscheibe (6) als Rasthaken ausgeführt ist, der radial die Mantelfläche des Filterelements (4) überragt, wobei an dem Halterungsteil (7) zwei elastisch federnde Kontaktteile (10) ausgebildet sind, wobei zwischen den Kontaktteilen (10) ein als Rastlasche ausgebildetes Gegenhalterungsteil (8) eines Gehäusedeckels (3) aufnehmbar ist und wobei an der axial gegenüberliegenden Endscheibe (9) mindestens ein Formschlussteil (11) angeordnet ist, wobei das Formschlussteil (11) taschenförmig ausgeführt ist und wobei das taschenförmige mindestens eine Formschlussteil (11) am Filterelement (4) in Umfangsrichtung von einer Wandung begrenzt ist und einen Anschlag an einer Umfangswandung (12) aufweist und wobei die der Umfangswandung gegenüberliegende Seite des Formschlussteils (11) offen ausgebildet ist, wobei mindestens ein komplementär ausgebildetes korrespondierendes Gegenformschlussteil (13) an der Innenseite des Gehäusedeckels (3) über die jeweils offene Seite des mindestens einen Formschlussteils (11) in das Formschlussteil (11) bis zum Anschlag einfahren kann, wobei die Formschluss- und Halterungsteile (11,7) über eine Drehbewegung um die Längsachse (5) des Filterelements (4) in einen formschlüssig ineinandergreifenden Zustand überführbar sind.

7. Filtereinrichtung nach Anspruch 6, **dadurch gekennzeichnet, dass** das Formschlussteil (11) am Filterelement (4) als Bajonettverschluss ausgebildet ist.

## Claims

1. Filtering device, in particular for gas filtration, in particular air filter for internal combustion engines, with a filter element (4) accommodated in a filter housing (2), which can closed by a housing cover (3), wherein a holding part (7), which projects beyond the external circumferential surface and to which a counter holding part (8) is allocated on the housing cover (3), is disposed on the filter element (4) and the holding parts (7) engage with each other in mounted state, **characterized in that** a form-fit part (11), to which a counter form-fit part (13) is allocated, is disposed on the filter element (4) with an axial distance from the holding part (7), wherein the holding part (7) on the end disk (6) is designed as locking hook which projects radially beyond the circumferential surface of the filter element (4), wherein two elastically resilient contact parts (10) are realized on the holding part (7), wherein the counter holding part (8) of the housing cover (3) designed as locking latch can be received between the contact parts (10) and wherein the form-fit part (11) is disposed on the axially opposed end disk (9), wherein the form-fit part (11) has a pocket-shaped design and wherein the pocket-shaped form-fit part (11) is delimited on the filter element (4) in circumferential direction by a wall and features a stop on a peripheral wall (12) and wherein the side of the form-fit part (11) opposing the peripheral wall has an open design, wherein the corresponding counter form-fit part (13) has a complementary design on the interior side of the housing cover (3) and can retract via the respective open side of the form-fit parts (11) into the form-fit parts (11) up to the respective stop, wherein the form-fit parts and the holding parts (11, 7) can be brought into a positively engaging state via a rotational motion around the longitudinal axis (5) of the filter element (4).

2. Filtering device according to claim 1, **characterized in that** the filter element (4) has a hollow-cylindrical design and the holding part (7) projects radially beyond the cylindrical circumferential surface.

3. Filtering device according to one of the claims 1 or 2, **characterized in that** a plurality of form-fit parts (11) are axially disposed on the filter element (4) at the same height, however distributed across the circumference.

4. Filtering device according to one of the claims 1 to 3, **characterized in that** the form-fit part (11) on the filter element (4) is designed as bayonet lock.

5. Filtering device according to one of the claims 1 to 4, **characterized in that,** in the assembled state, the elastic disengaging lever (14) contacts a locking protrusion (15) on the circumferential side of the filter element (4).

6. Filter element, in particular for gas filtration, in particular air filter element for internal combustion engines, comprising a filter medium, an end disk (6, 9) each on the front sides of the filter element (4), wherein a holding part (7) on an end disk (6) is designed as locking hook which projects radially beyond the circumferential surface of the filter element (4), wherein two elastically resilient contact parts (10) are realized on the holding part (7), wherein a counter holding part (8) of a housing cover (3) designed as locking latch can be received between the contact parts (10) and wherein at least one form-fit part (11) is disposed on the axially opposed end disk (9), wherein the form-fit part (11) has a pocket-shaped design and wherein the at least one pocket-shaped form-fit part (11) is delimited on the filter element (4) in circumferential direction by a wall and features a stop on a peripheral wall (12) and wherein the side of the form-fit part (11) opposing the peripheral wall has an open design, wherein at least one corresponding counter form-fit part (13) having a complementary design on the interior side of the housing cover (3) can retract via the respective open side of the at least one form-fit part (11) into the form-fit part (11) up to the stop, wherein the form-fit parts and the holding parts (11, 7) can be brought into a positively engaging state via a rotational motion around the longitudinal axis (5) of the filter element (4).

7. Filtering device according to claim 6, **characterized in that** the form-fit part (11) on the filter element (4) is designed as bayonet lock.

## Revendications

1. Dispositif de filtration, en particulier pour la filtration des gaz, en particulier filtre à air pour moteurs à combustion interne, avec un élément filtrant (4) logé dans un boîtier de filtre (2) pouvant être obturé par un couvercle de boîtier (3), une pièce de fixation (7) dépassant la surface externe étant disposée sur l'élément filtrant (4), une contrepartie de fixation (8) étant assignée à la pièce de fixation sur le couvercle de boîtier (3) et les pièces de fixation (7) s'engrenant en état monté, **caractérisé en ce que** une pièce à verrouillage positif (11), auquel une contre-pièce à verrouillage positif (13) est assigné, est disposé sur l'élément filtrant (4) à une distance axiale de la pièce de fixation (7), la pièce de fixation (7) étant réalisée sur le disque d'extrémité (6) sous forme de crochet d'encliquetage qui dépasse radialement la surface externe de l'élément filtrant (4), deux pièces de contact élastiques (10) étant réalisées sur la pièce de fixation (7), la contrepartie de fixation (8) du couvercle du boîtier (3) réalisée sous forme d'une languette d'encliquetage pouvant être reçue entre les parties de contact (10) et la pièce à verrouillage positif (11) étant disposé sur le disque d'extrémité (9) opposé axialement, la pièce à verrouillage positif (11) étant réalisé sous forme de poche et la pièce à verrouillage positif (11) sous forme de poche étant délimité sur l'élément filtrant (4) dans la direction circonférentielle par une paroi et comportant une butée sur une paroi circonférentielle (12) et le côté de la pièce à verrouillage positif (11) opposé à la paroi circonférentielle étant ouvert, la contre-pièce à verrouillage positif correspondant (13) étant réalisé de manière complémentaire à l'intérieur du couvercle de boîtier (3) et pouvant se rétracter dans les pièces à verrouillage positif (11) jusqu'à la butée respective via le côté ouvert respectif des pièces à verrouillage positif (11), les pièces à verrouillage positif et les pièces de fixation (11, 7) pouvant être amenés/amenées dans un état d'engagement positif par un mouvement rotatif autour de l'axe longitudinal (5) de l'élément filtrant (4).

2. Dispositif de filtration selon la revendication 1, **caractérisé en ce que** l'élément filtrant (4) est réalisé sous forme de cylindre creux et la pièce de fixation (7) dépasse en sens axial la surface externe cylindrique.

3. Dispositif de filtration selon l'une des revendications 1 ou 2, **caractérisé en ce que** plusieurs pièces à verrouillage positif (11) sont disposés axialement à la même hauteur sur l'élément filtrant (4), cependant repartis sur le pourtour.

4. Dispositif de filtration selon l'une des revendications 1 à 3, **caractérisé en ce que** la pièce à verrouillage positif (11) est réalisé sur l'élément filtrant (4) sous forme d'un raccord à baïonnette.

5. Dispositif de filtration selon l'une des revendications 1 à 4, **caractérisé en ce que** le levier de déclenchement élastique (14) contacte, en état monté, une saillie d'encliquetage (15) sur le côté circonférentiel de l'élément filtrant (4).

6. Élément filtrant, en particulier pour la filtration des gaz, en particulier élément de filtre à air pour moteurs à combustion interne, comprenant un milieu filtrant, un disque d'extrémité (6, 9) respectivement sur les faces frontales de l'élément filtrant (4), une pièce de fixation (7) étant réalisée sur un disque d'extrémité (6) sous forme de crochet d'encliquetage qui dépasse radialement la surface externe de l'élément filtrant (4), deux pièces de contact élastiques (10) étant réalisées sur la pièce de fixation (7), une contrepartie de fixation (8) d'un couvercle du boîtier (3) réalisée sous forme d'une languette d'encliquetage, pouvant être reçue entre les parties de contact (10) et la pièce à verrouillage positif (11) étant disposé sur le disque d'extrémité (9) opposé axialement, la pièce à verrouillage positif (11) étant réalisé sous forme de poche et la pièce à verrouillage positif (11) sous forme de poche, au moins au nombre d'un, étant délimité sur l'élément filtrant (4) dans la direction circonférentielle par une paroi et comportant une butée sur une paroi circonférentielle (12) et le côté de la pièce à verrouillage positif (11) opposé à la paroi circonférentielle étant ouvert, une contre-pièce à verrouillage positif correspondant (13), au moins au nombre d'un, réalisé de manière complémentaire à l'intérieur du couvercle de boîtier (3) pouvant se rétracter dans la pièce à verrouillage positif (11) jusqu'à la butée via le côté ouvert respectif de la pièce à verrouillage positif (11), au moins au nombre d'un, les pièces à verrouillage positif et les pièces de fixation (11, 7) pouvant être amenés/amenées dans un état d'engagement positif par un mouvement rotatif autour de l'axe longitudinal (5) de l'élément filtrant (4).

7. Dispositif de filtration selon la revendication 6, **caractérisé en ce que** la pièce à verrouillage positif (11) est réalisé sur l'élément filtrant (4) sous forme d'un raccord à baïonnette.
